# EUROPÄISCHE PATENTANMELDUNG

(11) **EP 3 671 168 A1**
(43) Veröffentlichungstag der Anmeldung: **24.06.2020**
(21) Anmeldenummer: 18214779.3
(22) Anmeldetag: 20.12.2018
(51) Int. Cl.: G01M 3/28, G01M 3/32, F17D 5/04, B65D 90/24, B65D 90/50

(54) **VERFAHREN ZUR DETEKTION UND VERHINDERUNG VON LECKAGEN**

(71) Anmelder: OMV REFINING & MARKETING GMBH, 1020 Wien (AT); INWA AG, 9464 Rüthi (CH)
(72) Erfinder: HOFFER, Ronald Jürgen, 7400 Oberwart (AT); PFAFFL, Thomas, 2122 Münichthal (AT); STEINBRUGGER, Christian, 1120 Wien (AT); HÖRBURGER, Jürgen, 9464 Rüthi (CH); KAHR, Robert, 8047 Graz (AT)
(74) Vertreter: Sonn & Partner Patentanwälte

(57) **Zusammenfassung**

Die Erfindung betrifft ein Verfahren zur Detektion und Verhinderung von Leckagen eines doppelwandigen Behälters (2), wobei der doppelwandige Behälter (2) eine innere Wand (3) und eine äußere Wand (4) aufweist, wobei zwischen der inneren Wand (3) und der äußeren Wand (4) ein Hohlraum (5) ausgebildet ist, wobei im Hohlraum (5) ein Überdruck erzeugt wird, wobei dem Hohlraum (5) bei einer Leckage der inneren Wand (3) ein Gas zugeführt wird, um einen Überdruck in dem Hohlraum (5) aufrecht zu erhalten.

Weiters wird ein Behältersystem (1) offenbart, das Folgendes aufweist:
- einen doppelwandigen Behälter (2), der eine innere Wand (3) und eine äußere Wand (4) aufweist, wobei zwischen der inneren Wand (3) und der äußeren Wand (4) ein Hohlraum (5) ausgebildet ist;
- ein Verdichter, bevorzugt ein Seitenkanalverdichter (9);
- eine mit der Führung eines Gases vorgesehenen Leitung (8) zum Verbinden der äußeren Wand (4) mit dem Verdichter;
- eine Steuer-/Regelungsvorrichtung, bevorzugt ein Regelventil, insbesondere ein Bypassregelventil (12), zum Steuern/Regeln eines Gasdurchflusses in der Leitung (8); und
- ein Druckmessgerät (11) zur Messung des Druckes im Hohlraum (5) des doppelwandigen Behälters (2).

## Beschreibung

Die Erfindung betrifft ein Verfahren zur Detektion und Verhinderung von Leckagen eines doppelwandigen Behälters und ein entsprechendes Behältersystem.

Doppelwandige Behälter weisen eine innere und eine äußere Wand auf und werden insbesondere verwendet, um die Wahrscheinlichkeit eines Austretens der in den doppelwandigen Behältern gespeicherten Medien zu reduzieren. Der Vorteil gegenüber Behältern mit nur einer Wand besteht darin, dass bei einer Leckage der inneren Wand die äußere Wand das gespeicherte Medium am Austreten hindert. Besonders relevant ist das Lagern/Speichern von giftigen, ätzenden, reizenden und/oder brennbaren Medien, die nicht in die Umwelt gelangen dürfen. Insbesondere stellt die Speicherung von ätzenden Medien in Behältern eine Herausforderung dar, da diese die Wände des Behälters, in dem sie gespeichert sind, angreifen und somit Leckagen verursachen können. Um bei der Speicherung von ätzenden Medien ein Zerstören der inneren und äußeren Wand zu verhindern, haben sich Vorrichtungen zur Detektion von Leckagen bewährt. Diese erkennen eine Leckage in der inneren Wand und geben dem Betreiber der den Behälter beinhaltenden Anlage ein Signal, sodass dieser auf die Leckage der inneren Behälterwand reagieren und ein Austreten des Mediums aus dem Behälter verhindern kann.

Ein derartiger doppelwandiger Behälter ist beispielsweise aus der EP 1 179 505 A1 bekannt. Darin ist eine Vorrichtung zum Lagern von Flüssigkeiten offenbart, die einen doppelwandigen Behälter, einen am Behältertiefpunkt angeordneten Auslauf aus einer doppelwandigen Rohrleitung sowie zwei Absperrarmaturen, die durch ein Verbindungselement verbunden sind, aufweist. Der doppelwandige Behälter, die doppelwandige Rohrleitung und die zwei Absperrarmaturen weisen jeweils einen Überwachungsraum auf, wobei die Überwachungsräume miteinander verbunden sind, um ein unkontrolliertes Austreten einer im Behälter gelagerten Flüssigkeit zu verhindern. Überwacht wird der gemeinsame Überwachungsraum mit einem Druck-Leckanzeigegerät, das bei einer Leckage ein Signal an eine Meldeeinrichtung weitergibt. Nachteilig ist dabei, dass diese Detektion von Leckagen nur bei Flüssigkeiten, nicht jedoch bei Gasen funktioniert. Darüber hinaus ist nachteilig, dass sich im Falle einer Leckage der inneren Wand die Flüssigkeit in den Überwachungsräumen des Behälters, der Rohrleitung und der Absperrarmaturen ansammelt.

Die Aufgabe der vorliegenden Erfindung besteht darin, zumindest einzelne Nachteile des Standes der Technik zu lindern bzw. zu beheben. Die Erfindung setzt sich insbesondere zum Ziel, ein Verfahren zur zuverlässigen Erkennung und Vermeidung von Leckagen eines doppelwandigen Behälters zu erzielen.

Die vorliegende Erfindung stellt ein Verfahren zur Detektion und Verhinderung von Leckagen eines doppelwandigen Behälters zur Verfügung, wobei der doppelwandige Behälter eine innere Wand und eine äußere Wand aufweist, wobei zwischen der inneren Wand und der äußeren Wand ein Hohlraum ausgebildet ist, wobei im Hohlraum ein Überdruck erzeugt wird, wobei dem Hohlraum bei einer Leckage der inneren Wand ein Gas zugeführt wird, um einen Überdruck in dem Hohlraum aufrecht zu erhalten.

Dadurch wird die genannte Aufgabe gelöst.

Dementsprechend stellt die Erfindung auch ein Behältersystem zur Verfügung. Dieses Behältersystem weist zumindest auf:
- einen doppelwandigen Behälter, der eine innere Wand und eine äußere Wand aufweist, wobei zwischen der inneren Wand und der äußeren Wand ein Hohlraum ausgebildet ist;
- ein Verdichter, bevorzugt ein Seitenkanalverdichter;
- eine mit der Führung eines Gases vorgesehenen Leitung zum Verbinden der äußeren Wand mit dem Verdichter;
- eine Steuer-/Regelungsvorrichtung, bevorzugt ein Regelventil, insbesondere ein Bypassregelventil, zum Steuern/Regeln eines Gasdurchflusses in der Leitung; und
- ein Druckmessgerät zur Messung des Druckes im Hohlraum des doppelwandigen Behälters.

Auch dadurch wird die genannte Aufgabe gelöst.

Überraschenderweise wird mit dem erfindungsgemäßen Verfahren das Medium, das sich im Inneren des doppelwandigen Behälters befindet, bei einer Leckage der inneren Wand nicht aus dem Behälter austreten, da, aufgrund des absoluten Drucks im Hohlraum zwischen der inneren und der äußeren Wand des Behälters, der größer ist als der absolute Druck im Behälter, sich eine Strömung vom Hohlraum durch die Leckage der inneren Wand in das Innere des Behälters einstellt. Dabei ist das Innere des Behälters das vom Behälter umschlossene Volumen, wobei der Behälter nach oben zumindest teilweise geöffnet oder komplett geschlossen sein kann.

Das erfindungsgemäße Behältersystem umfasst einen doppelwandigen Behälter, der eine innere Wand und eine äußere Wand aufweist, wobei zwischen der inneren und der äußeren Wand ein Hohlraum ausgebildet ist. Des Weiteren weist das Behältersystem zum Erzeugen eines Überdrucks einen Verdichter, bevorzugt einen Seitenkanalverdichter, auf, der mit der äußeren Wand des doppelwandigen Behälters über eine zur Führung eines Gases vorgesehenen Leitung verbunden ist. Mithilfe eines Druckmessgeräts wird der Druck im Hohlraum des Behälters gemessen und über eine Steuer-/Regelungsvorrichtung ein Gasdurchfluss in der Leitung gesteuert bzw. geregelt. Fällt der Überdruck im Hohlraum des Behälters aufgrund einer Leckage ab, wird der sich verringernde Druck über das Druckmessgerät gemessen und das Drucksignal an die Steuer-/Regelungsvorrichtung gesendet. Daraufhin regelt die Steuer-/Regelungsvorrichtung, die bevorzugt ein Regelventil, insbesondere ein Bypassregelventil, ist, die Gasdurchflussrate in der Leitung, um geregelt Gas in den Hohlraum zu befördern und somit den Überdruck in dem Hohlraum aufrecht zu erhalten.

Gemäß einer bevorzugten Ausführungsform wird dem doppelwandigen Behälter zumindest ein Gas, bevorzugt zumindest ein Gas und zumindest eine Flüssigkeit, zugeführt. Vorteilhafterweise wird bei einer Leckage der inneren Wand des Behälters das Gas aufgrund des höheren Drucks im Hohlraum zwischen der inneren und der äußeren Wand bezogen auf den Druck des Gases im Behälter am Austreten aus dem Behälter gehindert.

Gemäß einer weiteren bevorzugten Ausführungsform wird der Überdruck im Hohlraum gemessen, vorzugsweise durch Messung des Druckes des dem doppelwandigen Behälter zugeführten Gases und durch Messung des Druckes des dem Hohlraum zugeführten Gases und durch Berechnung der Differenz dieser beiden Drücke ermittelt. Durch die Ermittlung des Differenzdrucks zwischen des dem doppelwandigen Behälter zugeführten Gases und des dem Hohlraum zugeführten Gases bezieht sich der Überdruck auf den Druck im Behälter und gewährleistet somit im Hohlraum einen höheren Druck als im Behälter. Demzufolge ist bei einer Leckage der inneren Wand die Strömungsrichtung durch die Leckage stets vom Hohlraum zum Inneren des Behälters und hindert so das Gas, das im Behälter gespeichert ist, am Austreten aus dem Behälter.

Um den Überdruck im Hohlraum zu regeln ist es günstig, wenn der Druck und/oder der Durchfluss des dem Hohlraum zugeführten Gases geregelt wird, sodass der Überdruck in dem Hohlraum, bezogen auf den Druck im Inneren des doppelwandigen Behälters, zwischen 5 mbar und 50 mbar, bevorzugt zwischen 10 mbar und 30 mbar, ist.

Gemäß einer bevorzugten Ausführungsform wird eine in dem doppelwandigen Behälter gespeicherte und aus diesem durch eine Leckage in der inneren Wand austretende, im Hohlraum sich ansammelnde, Flüssigkeit über eine Ablaufleitung am tiefsten Punkt des Hohlraumes in einen Monitoringbehälter geleitet, wobei der Monitoringbehälter teilweise mit einer weiteren Flüssigkeit, bevorzugt Wasser, besonders bevorzugt vollentsalztes Wasser oder enthärtetes Brauchwasser, gefüllt ist. Demzufolge ist der Monitoringbehälter über eine Leitung, die zum Führen einer Flüssigkeit vorgesehen ist, mit dem tiefsten Punkt des Hohlraumes des doppelwandigen Behälters verbunden. Dadurch wird ein Ansammeln einer im Behälter gespeicherten und aus diesem durch eine Leckage der inneren Wand austretenden Flüssigkeit im Hohlraum vermieden, sodass ein Austreten der Flüssigkeit durch die äußere Wand verhindert wird.

Vorteilhafterweise wird der Füllstand und/oder die Temperatur und/oder die Leitfähigkeit der Flüssigkeit im Monitoringbehälter zur Detektion von Leckagen des doppelwandigen Behälters gemessen. Für diesen Zweck ist es günstig, wenn der Monitoringbehälter ein Messgerät, insbesondere ein Radarmessgerät, zur Messung des Füllstandes der Flüssigkeit im Monitoringbehälter, aufweist. Weiters ist es günstig, wenn der Monitoringbehälter einen Leitfähigkeitssensor und/oder einen Temperatursensor aufweist, wobei vorzugsweise ein Multiparameter-Transmitter zur Auswertung der Messung der Leitfähigkeit und/oder der Temperatur der Flüssigkeit im Monitoringbehälter vorgesehen ist. Dies hat den Vorteil, das mit dem Multiparameter-Transmitter mehrere Parameter, wie beispielsweise Leitfähigkeit und Temperatur, gleichzeitig erfasst und überwacht werden können, um Abhängigkeiten der Parameter zu berücksichtigen. Ein Beispiel hierfür ist die Temperaturabhängigkeit der Leitfähigkeit.

Tritt im Behälter gespeicherte Flüssigkeit aus diesem aus, wird diese über die Ablaufleitung in den Monitoringbehälter geleitet, der teilweise mit einer weiteren Flüssigkeit gefüllt ist, wodurch der Flüssigkeits-Füllstand im Monitoringbehälter ansteigt. Somit kann im Monitoringbehälter mithilfe des Messgeräts, insbesondere des Radarmessgeräts, zur Messung des Füllstandes der Flüssigkeit im Monitoringbehälter eine Leckage des doppelwandigen Behälters detektiert werden. Die im Monitoringbehälter gespeicherte Flüssigkeit hat den Vorteil, dass beim Austritt einer im doppelwandigen Behälter gespeicherten Flüssigkeit, die eine hohe Temperatur aufweist, sich die im Monitoringbehälter gespeicherte kühlere Flüssigkeit und die aus dem doppelwandigen Behälter austretende wärmere Flüssigkeit im Monitoringbehälter vermischen und somit das Flüssigkeitsgemisch eine geringere Temperatur aufweist als die aus dem doppelwandigen Behälter austretende Flüssigkeit. Somit werden etwaige Messgeräte im Monitoringbehälter vor Überhitzung geschützt.

Wenn die Temperaturen der im Behälter gespeicherten Flüssigkeit und der im Monitoringbehälter gespeicherten Flüssigkeit unterschiedlich sind, kann mithilfe des Temperatursensors die Temperaturänderung der Flüssigkeit im Monitoringbehälter gemessen und durch die Änderung der Temperatur eine Leckage des doppelwandigen Behälters detektiert werden. Die aus dem Hohlraum des doppelwandigen Behälters in den Monitoringbehälter geleitete Flüssigkeit mischt sich mit der Flüssigkeit, die ursprünglich im Monitoringbehälter gespeichert war. Durch das Vermischen der beiden Flüssigkeiten ergibt sich eine mittlere Temperatur des dabei entstehenden Flüssigkeitsgemisches, die sich von der Temperatur der Flüssigkeit, mit der der Monitoringbehälter ursprünglich teilweise gefüllt war, unterscheidet. Durch diese Temperaturänderung ist eine Detektion einer Leckage des doppelwandigen Behälters möglich. Bei einer größeren Leckage der inneren Wand kann zusätzlich mithilfe der Temperaturmessung und einer Kühlung des Monitoringbehälters die Temperatur im Monitoringbehälter geregelt werden.

Bei unterschiedlicher Leitfähigkeit der im Behälter gespeicherten Flüssigkeit und der im Monitoringbehälter gespeicherten Flüssigkeit kann mithilfe des Leitfähigkeitssensors die Änderung der Leitfähigkeit der Flüssigkeit im Monitoringbehälter gemessen und durch diese Leitfähigkeitsänderung ebenfalls eine Leckage des doppelwandigen Behälters detektiert werden. Aufgrund des Hinzuführens der aus dem Hohlraum des doppelwandigen Behälters geleiteten Flüssigkeit in den Monitoringbehälter ändert sich die Leitfähigkeit der im Monitoringbehälter gespeicherten Flüssigkeit. Durch diese Änderung der Leitfähigkeit ist eine Detektion einer Leckage des doppelwandigen Behälters möglich.

Gemäß einer bevorzugten Ausführungsform wird bei Erreichen eines vorgegebenen Grenzwertes des Füllstandes und/oder der Temperatur und/oder der Leitfähigkeit der Flüssigkeit im Monitoringbehälter ein Alarm ausgelöst. Durch das Auslösen des Alarms wird der Betreiber des doppelwandigen Behälters auf eine Leckage der inneren Wand des Behälters hingewiesen, sodass rechtzeitig notwendige Maßnahmen auf die Leckage der inneren Wand getroffen werden können.

Um ein Überlaufen des Monitoringbehälters zu verhindern ist es günstig, wenn bei Erreichen eines Füllstand-Grenzwertes der Flüssigkeit im Monitoringbehälter der Monitoringbehälter über ein Bodenablassventil in einen weiteren Behälter, vorzugsweise einen Intermediate-Bulk-Container (IBC), entleert wird. Dies hat zum Vorteil, dass die aus dem doppelwandigen Behälter austretende Flüssigkeit nicht mit der Umgebung in Kontakt gebracht wird.

Gemäß einer bevorzugten Ausführungsform weist das erfindungsgemäße Behältersystem ein Durchflussmessgerät zur Messung der Durchflussrate des dem Hohlraum des doppelwandigen Behälters zugeführten Gases auf. Im Falle einer Leckage wird der Durchfluss des Gases in der Leitung vom Verdichter zum Hohlraum durch Steuern/Regeln des Gasdurchflusses mithilfe der Steuer-/Regelungsvorrichtung, bevorzugt durch zumindest teilweises Schließen eines Regelventils, insbesondere eines Bypassregelventils, ansteigen, sodass mithilfe des Durchflussmessgeräts die Änderung der Durchflussrate gemessen und durch diese Änderung eine Leckage des doppelwandigen Behälters detektiert werden kann.

Um den doppelwandigen Behälter vor ätzenden gespeicherten Medien zu schützen, sind die innere Wand und die äußere Wand mit einer Sperrschicht, vorzugsweise aus einem Perfluoralkoxy-Polymer (PFA), ausgekleidet. Durch diese Auskleidung der Behälterwände wird einer Leckage des Behälters durch ätzende, im Behälter befindliche Medien, wie beispielsweise starke Säuren oder Basen, vorgebeugt.

Gemäß einer bevorzugten Ausführungsform wird der doppelwandige Behälter des Behältersystems als Säure-Kondensatorwanne in einem Entschwefelungsverfahren, bevorzugt einem Wet-Sulphuric-Acid(WSA)-Verfahren, verwendet. Aufgrund der in der Säure-Kondensatorwanne gespeicherten Schwefelsäure ist ein Austreten der Schwefelsäure durch eine Leckage in die Umgebung zu vermeiden. Das erfindungsgemäße Behältersystem verhindert solche durch ätzende Medien wie Schwefelsäure hervorgerufenen Leckagen und detektiert Leckagen der inneren Wand des doppelwandigen Behälters zur Vermeidung einer Leckage der äußeren Wand und folglich eines Austretens der Schwefelsäure aus dem doppelwandigen Behälter.

Die Erfindung wird nachstehend anhand dem in der Zeichnung gezeigten, nicht einschränkenden Ausführungsbeispiel weiter erläutert.

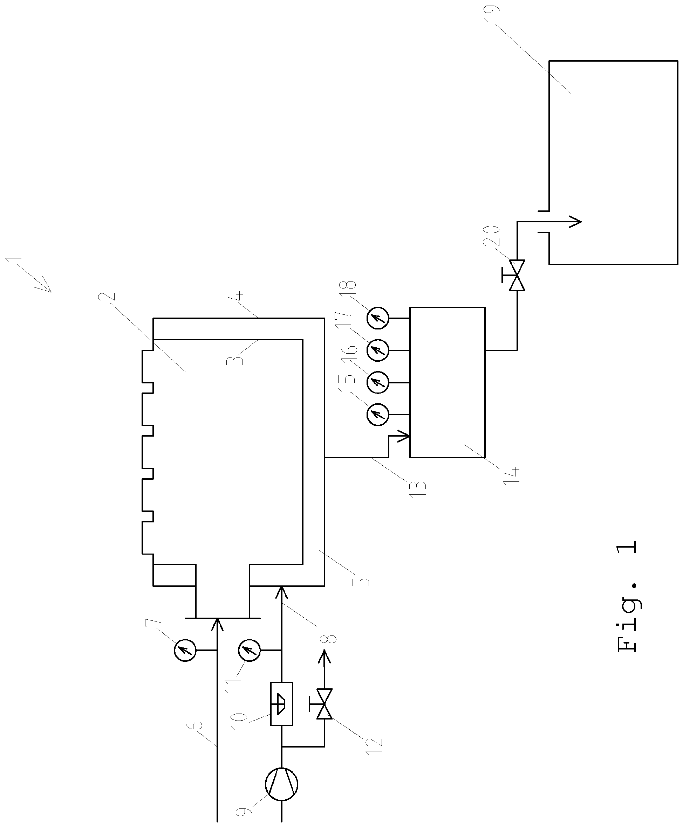

Fig. 1 zeigt ein Fließschema eines erfindungsgemäßen Behältersystems, bei welchem Leckagen eines doppelwandigen Behälters detektiert und verhindert werden.

In Fig. 1 ist ein Fließschema eines erfindungsgemäßen Behältersystems 1 gezeigt, das einen doppelwandigen Behälter 2 aufweist. Der doppelwandige Behälter 2 wird gemäß der gezeigten Ausführungsform als Säure-Kondensatorwanne in einem Wet-Sulphuric-Acid(WSA)-Verfahren verwendet. Mithilfe des WSA-Verfahrens, das beispielsweise aus der DE 689 12 776 T2 bekannt ist, wird Schwefelsäure in hauptsächlich senkrecht stehenden Rohren, die in der Säure-Kondensatorwanne angeordnet sind, erzeugt, wobei Schwefelsäuredämpfe kondensieren und Tröpfchen der Schwefelsäure in einem Spezialfilter aufgefangen werden. Dabei wird schwefelsäurehaltiges Gas bei einer Temperatur über dem Schwefelsäuretaupunkt von unten zu den Rohren zugeführt und unter der Aufwärtsströmung in den Rohren auf eine Temperatur gekühlt, sodass Schwefelsäure kondensiert. Am oberen Ende der Rohre sind Aerosolfilter zum Abscheiden der kondensierten Schwefelsäure befestigt.

In der gezeigten Ausführungsform ist der doppelwandige Behälter 2 ein geschlossener Behälter, der eine innere Wand 3 und eine äußere Wand 4 aufweist, wobei zwischen der inneren Wand 3 und der äußeren Wand 4 ein Hohlraum 5 ausgebildet ist. Die innere Wand 3 und die äußere Wand 4 sind mit einer Sperrschicht aus einem Perfluoralkoxy-Polymer (PFA) ausgekleidet, um die Resistenz gegenüber der in dem Behälter 2 gespeicherten Flüssigkeit, die zumindest teilweise aus Schwefelsäure besteht, zu erhöhen.

In der gezeigten Ausführungsform wird über eine Zuleitung 6 schwefelhaltiges Abgas in das Innere des geschlossenen doppelwandigen Behälters 2 geführt, um Schwefelsäuredämpfe im Behälter 2 zu kondensieren. Ein Druckmessgerät 7 misst den Druck der Zuleitung 6, wobei dieser Druck dem Druck im Inneren des Behälters 2 entspricht. Über eine Leitung 8, die mit dem Hohlraum 5 des Behälters 2 verbunden ist, wird Gas dem Hohlraum 5 zugeführt. Dieses Gas wird mithilfe eines Verdichters, der als Seitenkanalverdichter 9 ausgeführt und mit der Leitung 8 verbunden ist, auf Überdruck gebracht. Des Weiteren sind an der Leitung 8 ein Durchflussmessgerät 10 zum Messen der Durchflussrate und ein Druckmessgerät 11 zur Druckmessung in der Leitung 8 angeordnet. Mithilfe der Druckmessung in der Zuleitung 6 durch das Druckmessgerät 7 und der Druckmessung in der Leitung 8 durch das Druckmessgerät 11 wird ein Differenzdruck zwischen dem Inneren des geschlossenen Behälters 2 und dem Hohlraum 5 ermittelt, wobei das Signal des ermittelten Differenzdrucks an eine Steuer-/Regelungsvorrichtung, die in der gezeigten Ausführungsform als Bypassregelventil 12 ausgeführt ist, gesendet wird. Im Normalbetrieb wird mittels Seitenkanalverdichter 9 und Druckregelung durch das Bypassregelventil 12 ein konstanter Überdruck im Hohlraum 5 des Behälters 2 von 20 mbar, bezogen auf den Druck im Inneren des Behälters 2, erzeugt. Sollte im Inneren des Behälters 2 kein Überdruck gegenüber der Umgebung vorliegen, beispielsweise wenn kein schwefelhaltiges Abgas zugeführt wird, wird auch der Seitenkanalverdichter 9 außer Betrieb gesetzt.

Im Fall einer Leckage der inneren Wand 3 strömt Gas aus dem Hohlraum 5 in das Innere des Behälters 2 aus, wodurch der Überdruck im Hohlraum 5 sinkt. Dadurch steigt die Durchflussrate des Gases in der Leitung 8 an, wobei dieser Anstieg mithilfe des Durchflussmessgeräts 10 detektiert und ein Alarm gemeldet wird. Gleichzeitig fällt der Druck in der Leitung 8 ab, wobei das Bypassregelventil 12 den Druckabfall ausgleicht.

In der gezeigten Ausführungsform weist der doppelwandige Behälter 2 eine Ablaufleitung 13 aus Polytetrafluorethylen (PTFE) am tiefsten Punkt des Hohlraumes 5 auf. Diese Ablaufleitung 13 ist mit einem Monitoringbehälter 14 verbunden, der ungefähr zu 70 % mit enthärtetem Brauchwasser gefüllt ist. Der Monitoringbehälter 14 weist ein Radarmessgerät 15 zur Messung des Füllstandes der im Monitoringbehälter 14 gespeicherten Flüssigkeit auf. Zusätzlich zum Radarmessgerät 15 weist der Monitoringbehälter 14 einen Füllstandgrenzwertgeber 16 zur Alarmierung bei Erreichen eines Füllstandgrenzwertes auf. Des Weiteren weist der Monitoringbehälter 14 in der gezeigten Ausführungsform einen Leitfähigkeitssensor 17 und einen Temperatursensor 18 zum Messen der Leitfähigkeit bzw. der Temperatur der im Monitoringbehälter 14 gespeicherten Flüssigkeit auf. Um einen sicheren Betrieb der Leitfähigkeitsmessung zu gewährleisten, muss der letzte Teil des Leitfähigkeitssensors 17, der in der gezeigten Ausführungsform als Sonde ausgeführt ist, immer mit Flüssigkeit umspült werden. Die Auswertung der Leitfähigkeitsmessung und der Temperaturmessung erfolgt über einen Multiparameter-Transmitter, der in Fig. 1 nicht gezeigt ist.

In der gezeigten Ausführungsform tritt bei einer Leckage der inneren Wand 3 die im Behälter 2 gespeicherte Flüssigkeit, die zumindest teilweise aus Schwefelsäure besteht, durch die Leckage aus und sammelt sich im Hohlraum 5 an, wobei die Flüssigkeit durch die Schwerkraft zum tiefsten Punkt des Hohlraumes 5 fließt. Am tiefsten Punkt wird die Flüssigkeit über die Ablaufleitung 13 in den Monitoringbehälter 14 geleitet, wobei sich die Flüssigkeit im Monitoringbehälter 14 mit dem gespeicherten enthärteten Brauchwasser vermischt. Die Temperatur des gespeicherten enthärteten Brauchwassers beträgt aufgrund einer konstanten Wandkühlung des Monitoringbehälters 14 ungefähr 30 °C. Durch das Vermischen des enthärteten Brauchwassers mit der wärmeren, in den Monitoringbehälter 14 geleiteten Flüssigkeit aus dem Behälter 2 steigt die Temperatur des Flüssigkeitsgemisches im Monitoringbehälter 14 an. Dieser Temperaturanstieg wird mithilfe des Temperatursensors 18 gemessen und ein entsprechendes Signal an den Multiparameter-Transmitter gesendet. Der Multiparameter-Transmitter wertet das Signal des Temperaturanstiegs aus und löst bei einer Flüssigkeitstemperatur im Monitoringbehälter 14 von 50 °C einen Alarm aus.

Durch das Vermischen des enthärteten Brauchwassers mit der Flüssigkeit aus dem Behälter 2 ändert sich zusätzlich zur Temperatur auch die Leitfähigkeit des Flüssigkeitsgemisches. Diese Leitfähigkeitsänderung wird mithilfe des Leitfähigkeitssensors 17 gemessen und ein entsprechendes Signal an den Multiparameter-Transmitter gesendet. Der Multiparameter-Transmitter wertet das Signal des Anstiegs der Leitfähigkeit aus und löst ebenfalls einen Alarm aus.

Aufgrund der in den Monitoringbehälter 14 eingeleiteten Flüssigkeit steigt der Füllstand des im Monitoringbehälter 14 gespeicherten Flüssigkeitsgemisches an, wobei der Anstieg des Füllstandes vom Radarmessgerät 15 gemessen und ein entsprechendes Signal an eine Vorrichtung zum Auswerten der Messung gesendet wird. Durch den Anstieg des Füllstandes kann eine Leckage der inneren Wand 3 des Behälters 2 erkannt werden, sodass rechtzeitig notwendige Maßnahmen auf die Leckage der inneren Wand 3 getroffen werden können. Wenn die Füllstandshöhe der Flüssigkeit ungefähr 90 % der Höhe des inneren Volumens des Monitoringbehälters 14 beträgt, wird durch den Füllstandgrenzwertgeber 16 ein Alarm ausgelöst. Beim Auslösen des Alarms wird der Monitoringbehälter 14 in einen unterhalb des Monitoringbehälters 14 aufgestellten Intermediate-Bulk-Container (IBC) 19 mittels eines Bodenablassventils 20 entleert, um einen Kontakt der aus dem Behälter 2 austretenden und in den Monitoringbehälter 14 geleiteten Flüssigkeit mit der Umgebung zu verhindern.

## Patentansprüche

1. Verfahren zur Detektion und Verhinderung von Leckagen eines doppelwandigen Behälters (2), wobei der doppelwandige Behälter (2) eine innere Wand (3) und eine äußere Wand (4) aufweist, wobei zwischen der inneren Wand (3) und der äußeren Wand (4) ein Hohlraum (5) ausgebildet ist, wobei im Hohlraum (5) ein Überdruck erzeugt wird, **dadurch gekennzeichnet, dass** dem Hohlraum (5) bei einer Leckage der inneren Wand (3) ein Gas zugeführt wird, um einen Überdruck in dem Hohlraum (5) aufrecht zu erhalten.

2. Verfahren nach Anspruch 1, **dadurch gekennzeichnet, dass** dem Behälter (2) zumindest ein Gas, bevorzugt zumindest ein Gas und zumindest eine Flüssigkeit, zugeführt wird.

3. Verfahren nach Anspruch 2, **dadurch gekennzeichnet, dass** der Überdruck im Hohlraum (5) gemessen wird, vorzugsweise durch Messung des Druckes des dem doppelwandigen Behälter (2) zugeführten Gases und durch Messung des Druckes des dem Hohlraum (5) zugeführten Gases und durch Berechnung der Differenz dieser beiden Drücke ermittelt wird.

4. Verfahren nach Anspruch 2 oder 3, **dadurch gekennzeichnet, dass** der Druck und/oder der Durchfluss des dem Hohlraum (5) zugeführten Gases geregelt wird, sodass der Überdruck in dem Hohlraum (5), bezogen auf den Druck im Inneren des doppelwandigen Behälters (2), zwischen 5 mbar und 50 mbar, bevorzugt zwischen 10 mbar und 30 mbar, ist.

5. Verfahren nach einem der Ansprüche 1 bis 4, **dadurch gekennzeichnet, dass** eine in dem doppelwandigen Behälter (2) gespeicherte und aus diesem durch eine Leckage der inneren Wand (3) austretende, im Hohlraum (5) sich ansammelnde, Flüssigkeit über eine Ablaufleitung (13) am tiefsten Punkt des Hohlraumes (5) in einen Monitoringbehälter (14) geleitet wird, wobei der Monitoringbehälter (14) teilweise mit einer weiteren Flüssigkeit, bevorzugt Wasser, besonders bevorzugt vollentsalztes Wasser oder enthärtetes Brauchwasser, gefüllt ist.

6. Verfahren nach Anspruch 5, **dadurch gekennzeichnet, dass** der Füllstand und/oder die Temperatur und/oder die Leitfähigkeit der Flüssigkeit im Monitoringbehälter (14) zur Detektion von Leckagen des doppelwandigen Behälters (2) gemessen wird.

7. Verfahren nach Anspruch 5 oder 6, **dadurch gekennzeichnet, dass** bei Erreichen eines vorgegebenen Grenzwertes des Füllstandes und/oder der Temperatur und/oder der Leitfähigkeit der Flüssigkeit im Monitoringbehälter (14) ein Alarm ausgelöst wird.

8. Verfahren nach einem der Ansprüche 5 bis 7, **dadurch gekennzeichnet, dass** bei Erreichen eines Füllstand-Grenzwertes der Flüssigkeit im Monitoringbehälter (14) der Monitoringbehälter (14) über ein Bodenablassventil (20) in einen weiteren Behälter, vorzugsweise einen Intermediate-Bulk-Container (IBC) (19), entleert wird.

9. Behältersystem (1), das Folgendes aufweist:
- einen doppelwandigen Behälter (2), der eine innere Wand (3) und eine äußere Wand (4) aufweist, wobei zwischen der inneren Wand (3) und der äußeren Wand (4) ein Hohlraum (5) ausgebildet ist;
- ein Verdichter, bevorzugt ein Seitenkanalverdichter (9);
- eine mit der Führung eines Gases vorgesehenen Leitung (8) zum Verbinden der äußeren Wand (4) mit dem Verdichter;
- eine Steuer-/Regelungsvorrichtung, bevorzugt ein Regelventil, insbesondere ein Bypassregelventil (12), zum Steuern/Regeln eines Gasdurchflusses in der Leitung (8); und
- ein Druckmessgerät (11) zur Messung des Druckes im Hohlraum (5) des doppelwandigen Behälters (2).

10. Behältersystem (1) nach Anspruch 9, **gekennzeichnet durch** einen Monitoringbehälter (14), der mit dem tiefsten Punkt des Hohlraumes (5) des doppelwandigen Behälters (2) verbunden ist.

11. Behältersystem (1) nach Anspruch 9 oder 10, **gekennzeichnet durch** ein Durchflussmessgerät (10) zur Messung der Durchflussrate des dem Hohlraum (5) des doppelwandigen Behälters (2) zugeführten Gases.

12. Behältersystem (1) nach einem der Ansprüche 9 bis 11, **dadurch gekennzeichnet, dass** der Monitoringbehälter (14) ein Messgerät, insbesondere ein Radarmessgerät (15), zur Messung des Füllstandes aufweist.

13. Behältersystem (1) nach einem der Ansprüche 9 bis 12, **dadurch gekennzeichnet, dass** der Monitoringbehälter (14) einen Leitfähigkeitssensor (17) und/oder einen Temperatursensor (18) aufweist, wobei vorzugsweise ein Multiparameter-Transmitter zur Auswertung der Messung der Leitfähigkeit und/oder der Temperatur vorgesehen ist.

14. Behältersystem (1) nach einem der Ansprüche 9 bis 13, **dadurch gekennzeichnet, dass** die innere Wand (3) und die äußere Wand (4) des doppelwandigen Behälters (2) mit einer Sperrschicht, vorzugsweise aus einem Perfluoralkoxy-Polymer (PFA), ausgekleidet sind.

15. Verwendung des doppelwandigen Behälters (2) des Behältersystems (1) nach einem der Ansprüche 9 bis 14 als Säure-Kondensatorwanne in einem Entschwefelungsverfahren, bevorzugt einem Wet-Sulphuric-Acid(WSA)-Verfahren.
